# EUROPEAN PATENT APPLICATION

(11) **EP 4 672 623 A1**
(43) Date of publication of application: **31.12.2025**
(21) Application number: 25167826.4
(22) Date of filing: 01.04.2025
(51) Int. Cl.: H04B 1/48, H04L 5/14

(54) **USER EQUIPMENT, CONTROLLING METHOD AND RFFE MODULE THEREOF**

(30) Priority: 24.06.2024 US 202463663207 P; 16.01.2025 US 202519023583
(71) Applicant: MediaTek Inc., Hsinchu City, 30078 (TW)
(72) Inventor: Chen, Hsiao-Wei, Hsinchu City (TW); Wu, Wan-Chin, Hsinchu City (TW); Li, Nian-Rong, Hsinchu City (TW)
(74) Representative: Bandpay & Greuter

(57) **Abstract**

A user equipment, a controlling method and a processing module thereof are provided. The user equipment comprises a radio frequency front-end (RFFE) module and a processing module. The radio frequency front-end module comprises a first transmission path and a second transmission path. The first transmission path is a Time Division Duplexing (TDD) path. The second transmission path is another TDD path or a Frequency Division Duplexing (FDD) path. The processing module is configured to control the RFFE module. A special slot for a TDD transmission on the first transmission path comprises at least one downlink symbol, at least one uplink symbol and at least one guard symbol. During the guard symbol, the first transmission path is controlled to be either a TDD receiving state for executing a TDD downlink transmission or a TDD transmitting state for executing a TDD uplink transmission.

## Description

### TECHNICAL FIELD

The disclosure relates in general to an electronic device and a method thereof, and more particularly to a user equipment, a controlling method and a radio frequency front-end (RFFE) module thereof.

### BACKGROUND

In the wireless communication technology, a user equipment (UE) could support multiple channels operating simultaneously. It allows to handle signals from multiple frequency bands at the same time. For example, the multiple channels may be executed under a Frequency Division Duplexing (FDD) mode and a Time Division Duplexing (TDD) mode. The FDD is a duplexing technique that uses different frequencies to separate the uplink and downlink communication. The TDD is another duplexing technique that separates uplink and downlink communication by time and both uplink and downlink use the same frequency band but operate at different time intervals.

For enhancing network performance, Inter-band Carrier Aggregation (ICA) in the FDD and the TDD is used. The ICA is a technology that aggregates multiple carriers from different frequency bands to increase data transmission rates and bandwidth, and this technology allows for carrier aggregation across different frequency bands. However, when executing the ICA, throughput degradation may be happened and the transmission efficiency is affected.

### SUMMARY

A user equipment (UE), radio frequency front-end (RFFE) module and controlling method according to the invention are defined in the independent claims. The dependent claims define preferred embodiments thereof. The disclosure is directed to a user equipment, a controlling method and a processing module thereof. A Time Division Duplexing (TDD) transmission control and a gain/phase compensation are executed in the user equipment. Therefore, the phase/gain on the downlink transmission would not vary greatly and the throughput degradation could be prevented.

According to one embodiment, a user equipment (UE) is provided. The user equipment comprises a radio frequency front-end (RFFE) module and a processing module. The radio frequency front-end module comprises a first transmission path and a second transmission path. The first transmission path is a Time Division Duplexing (TDD) path. The second transmission path is another TDD path or a Frequency Division Duplexing (FDD) path. The processing module is configured to control the RFFE module. A special slot for a TDD transmission on the first transmission path comprises at least one downlink symbol, at least one uplink symbol and at least one guard symbol. During the guard symbol, the first transmission path is controlled to be either a TDD receiving state for executing a TDD downlink transmission or a TDD transmitting state for executing a TDD uplink transmission.

According to another embodiment, a controlling method of a user equipment (UE) is provided. The controlling method comprises the following steps. A processing module controls an operation of a first transmission path of a radio frequency front-end (RFFE) module. The first transmission path is a Time Division Duplexing (TDD) path. A special slot for a TDD transmission on the first transmission path comprises at least one downlink symbol, at least one uplink symbol and at least one guard symbol. During the guard symbol, the first transmission path is controlled to be either a TDD receiving state for executing a TDD downlink transmission or a TDD transmitting state for executing a TDD uplink transmission. The processing module controls an operation of a second transmission path of the RFFE module. The second transmission path is another TDD path or a Frequency Division Duplexing (FDD) path.

According to an alternative embodiment, a radio frequency front-end (RFFE) module is provided. The RFFE module comprises a first transmission path and a second transmission path. The first transmission path is a Time Division Duplexing (TDD) path. The second transmission path is another TDD path or a Frequency Division Duplexing (FDD) path. A special slot for a TDD transmission comprises at least one downlink symbol, at least one uplink symbol and at least one guard symbol. During the guard symbol, the first transmission path is controlled to be either a TDD receiving state for executing a TDD downlink transmission or a TDD transmitting state for executing a TDD uplink transmission.

### BRIEF DESCRIPTION OF THE DRAWINGS

Figure 1 illustrates a user equipment according to one embodiment of the present disclosure.
Figure 2A shows a schematic diagram of a portion of a radio frequency front-end (RFFE) module according to one embodiment of the present disclosure.
Figure 2B shows another a schematic diagram of a portion of a radio frequency front-end (RFFE) module according to another embodiment of the present disclosure.
Figure 3 shows the throughput (TPUT) degradation at the transition between the Time Division Duplexing (TDD) uplink transmission and the TDD downlink transmission.
Figure 4 shows one TDD sub-frame for the TDD transmission on the first transmission path according to one embodiment of the present disclosure.
Figure 5 shows the timing control for a special slot according to one embodiment of the present disclosure.
Figure 6 shows the timing control for the special slot according to another embodiment of the present disclosure.
Figure 7 shows the TDD transmission control and the gain/phase compensation according to one embodiment of the present disclosure.
Figure 8 shows the TDD transmission control and the gain/phase compensation according to another embodiment of the present disclosure.
Figure 9 shows a flowchart of a controlling method for the user equipment according to one embodiment of the present disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

The technical terms used in this specification refer to the idioms in this technical field. If there are explanations or definitions for some terms in this specification, the explanation or definition of this part of the terms shall prevail. Each embodiment of the present disclosure has one or more technical features. To the extent possible, a person with ordinary skill in the art may selectively implement some or all of the technical features in any embodiment, or selectively combine some or all of the technical features in these embodiments.

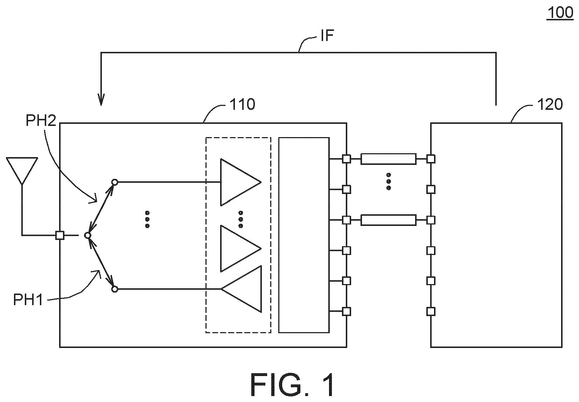

Please refer to Figure 1, which illustrate a user equipment 100 according to one embodiment of the present disclosure. The user equipment 100 is, for example, a mobile phone, a laptop, a circuit board in an electric device, or a SOC (system-on-chip) chip. The user equipment 100 comprises a radio frequency front-end (RFFE) module 110 and a processing module 120. The processing module 120 is, for example, a transceiver (XCVR), a modulator-demodulator (MODEM) or a combination thereof. The transceiver is configured to convert baseband signals into radio frequency (RF) signals for transmission and to convert received RF signals back into baseband signals for processing. The MODEM is for modulating digital data onto a carrier wave for transmission over a communication channel and demodulating received modulated signals to retrieve the transmitted digital data. The processing module 120 may be further configured to perform error correction, signal encoding, and decoding to ensure data integrity and efficient utilization of the communication channel.

The radio frequency front-end (RFFE) module 110 comprises a first transmission path PH1 and a second transmission path PH2. The first transmission path PH1 is a Time Division Duplexing (TDD) path. The second transmission path PH2 is another TDD path or a Frequency Division Duplexing (FDD) path. In the embodiment, the first transmission path PH1 and the second transmission path PH2 can be controlled to be enabled simultaneously. The FDD is a duplexing technique that uses different frequencies to separate the uplink and downlink communication. For example, the uplink might use one frequency band while the downlink uses another. The TDD is another duplexing technique that separates uplink and downlink communication by time, and both uplink and downlink use the same frequency band but operate at different time intervals.

The processing module 120 is configured to control the RFFE module 111 through a mobile industry processor interface (MIPI) IF, but the present disclosure is not limited thereto.

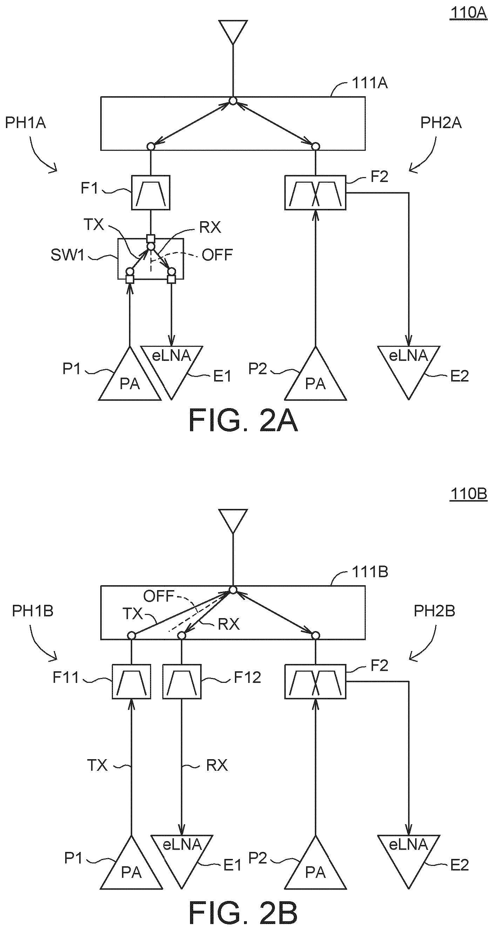

Please refer to Figure 2A, which shows a schematic diagram of a portion of a radio frequency front-end (RFFE) module 110A according to one embodiment of the present disclosure. The radio frequency front-end (RFFE) module 110A comprises an Antenna Switch Module (ASM) 111A, the first transmission path PH1A and the second transmission path PH2A. In Figure 2A, the first transmission path PH1A is the TDD path and the second transmission path PH2A is the FDD path.

The ASM 111A may comprise a component used to switch antennas between different frequency bands and modes, such as a FDD mode and/or a TDD mode. For example, the ASM 111A is a multi-on ASM with Inter-band Carrier Aggregation (ICA) in the FDD and the TDD, but the present disclosure is not limited thereto. The ICA is a technology that aggregates multiple carriers from different frequency bands to increase data transmission rates and bandwidth, and this technology allows for carrier aggregation across different frequency bands, enhancing network performance.

The ASM 111A uses a multi-channel antenna switch module that can operate simultaneously across multiple channels for inter-band carrier aggregation. This aggregation can occur in both of the FDD mode and the TDD mode, significantly improving network flexibility and data transmission capabilities.

As shown in the Figure 2A, a FDD duplexer F2 is used for filtering and duplexing the signal on the second transmission path PH2A for the FDD downlink transmission and the FDD uplink transmission. The FDD duplexer F2 is connected to a power amplifier (PA) P2 for the FDD uplink transmission. The FDD duplexer F2 is connected to an external low noise amplifier (eLNA) E2 for the FDD downlink transmission.

A TDD filter F1 is used for filtering the signal on the first transmission path PH1A. A switch SW1 is used for switching the first transmission path PH1A to be either a TDD transmitting state TX for executing a TDD uplink transmission or a TDD receiving state RX for executing a TDD downlink transmission. The switch SW1 is connected to a power amplifier (PA) P1 for the TDD uplink transmission and connected to an external low noise amplifier (eLNA) E1 for the TDD downlink transmission.

As shown in the Figure 2A, the first transmission path PH1A for the TDD transmission has the TDD transmitting state TX, the TDD receiving state RX, and a TDD turning-off state OFF. At the TDD receiving state RX, the first transmission path PH1A is configured to receive signals from the base station or other devices. At the TDD transmitting state TX, the first transmission path PH1A is configured to transmit signals to the base station or other devices. At the TDD turning-off state OFF, the first transmission path PH1A is in an inactive state. The TDD turning-off state OFF is typically happened during the transition between the TDD downlink transmission and the TDD uplink transmission. The TDD turning-off state OFF is used to save power. Or, The TDD turning-off state OFF is used when the user equipment does not need to communicate.

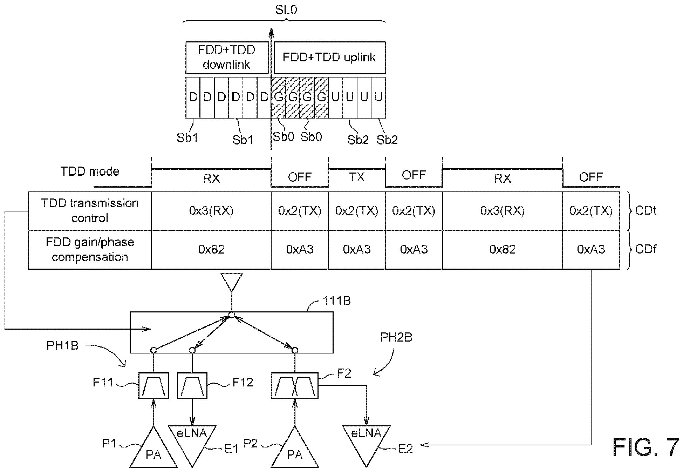

Generally, the switch SW1 is controlled by a TDD transmission control code which is a digital code (shown in the Figure 7). Different TDD transmission control codes correspond to different operating states. For example, "0x3" indicates the TDD receiving state RX, "0x2" indicates the TDD transmitting state TX, and "0x0" indicates the TDD turning-off state OFF. "0x" is a common prefix used to indicate that the following number is in hexadecimal format.

In one embodiment of the ASM 111A, when the first transmission path PH1A is switched, by the switch SW1, between the TDD transmitting state TX for executing the TDD uplink transmission and the TDD receiving state RX for executing the TDD downlink transmission, the phase/gain on the second transmission path PH2A will be kept constant or less due to the changes of the loads.

Please refer to Figure 2B, which shows another architecture of a schematic diagram of a portion of a radio frequency front-end (RFFE) module 110B according to another embodiment of the present disclosure. The radio frequency front-end (RFFE) module 110B comprises an Antenna Switch Module (ASM) 111B, the first transmission path PH1B and the second transmission path PH2B. In Figure 2B, the first transmission path PH1B is the TDD path and the second transmission path PH2B is the FDD path. As shown in the Figure 2B, the FDD duplexer F2 is used for filtering and duplexing the signal on the second transmission path PH2B for the FDD downlink transmission and the FDD uplink transmission. The FDD duplexer F2 is connected to the power amplifier (PA) P2 for the FDD uplink transmission. The FDD duplexer F2 is connected to the external low noise amplifier (eLNA) E2 for the FDD downlink transmission.

A TDD TX filter F11 and a TDD RX filter F12 are used for filtering the signal on the first transmission path PH1B for the TDD uplink transmission and the TDD downlink transmission respectively. The TDD TX filter F11 is connected to the power amplifier (PA) P1 for the TDD uplink transmission. The TDD RX filter F12 is connected to the external low noise amplifier (eLNA) E1 for the TDD downlink transmission.

As shown in the Figure 2B, the first transmission path PH1B has the TDD transmitting state TX, the TDD receiving state RX, and the TDD turning-off state OFF for the TDD transmission. At the TDD receiving state RX, the first transmission path PH1B is configured to receive signals from the base station or other devices. At the TDD transmitting state TX, the first transmission path PH1B is configured to transmit signals to the base station or other devices. At the TDD turning-off state OFF, the first transmission path PH1B is in an inactive state. The TDD turning-off state OFF is typically happened during the transition between the TDD downlink transmission and the TDD uplink transmission. The TDD turning-off state OFF is used to save power. Or, The TDD turning-off state OFF is used when the user equipment does not need to communicate.

Generally, the ASM 111B is controlled by a TDD transmission control code which is a digital code (shown in the Figure 7). Different TDD transmission control codes correspond to different operating states. For example, "0x3" indicates the TDD receiving state RX, "0x2" indicates the TDD transmitting state TX, and "0x0" indicates the TDD turning-off state OFF. "0x" is a common prefix used to indicate that the following number is in hexadecimal format.

The phase/gain on the second transmission path PH2B varies as switching between the TDD transmitting state TX for executing the TDD uplink transmission and the TDD receiving state RX for executing the TDD downlink transmission due to the changes of the loads.

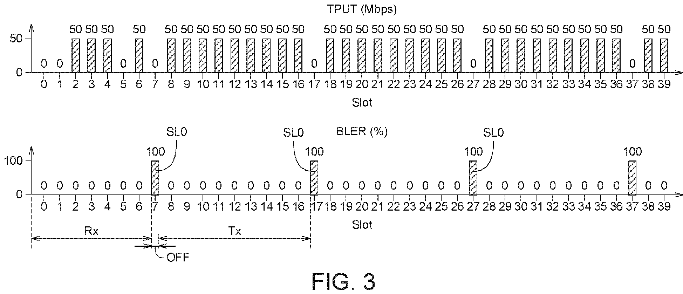

Please refer to Figure 3, which shows the throughput (TPUT) degradation at the transition between the TDD uplink transmission and the TDD downlink transmission. The Figure 3 shows an example for the n41-n25 CA band combo. When the switch SW1 or the ASM 111B switches from the TDD receiving state RX (for executing the TDD downlink transmission) to the TDD transmitting state TX (for executing the TDD uplink transmission), there is the TDD turning-off state OFF during a special slot (also referred as a flexible slot or F-slot) SL0. It can be understood that the special slot usually consists of three parts: at least one downlink (DL) symbol used for downlink transmission, at least one uplink (UL) symbol used for uplink transmission, and at least one guard (G) symbol, wherein the guard symbol is located between the at least one DL symbol and the at least one UL symbol (it can also be referred as between the at least one UL symbol and the at least one DL symbol). At this special slot SL0, the block error rate BLER is high due to the changes of the loads. Receptions on the FDD channels or other TDD channels may suffer from the TPUT degradation.

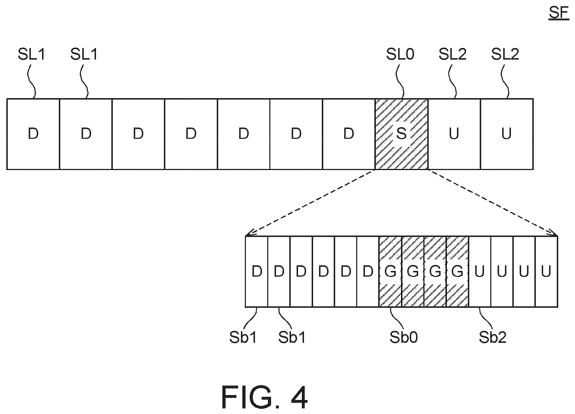

Please refer to Figure 4, which shows one TDD sub-frame SF for the TDD transmission on the first transmission path PH1A or PH1B according to one embodiment of the present disclosure. In the TDD transmission on the first transmission path PH1A or PH1B, one frame comprises, for example, 10 sub-frames SF. In the example shown in the Figure 4, one sub-frame SF comprises 7 downlink slots SL1 for the TDD downlink transmission, one special slot SL0 and 2 uplink slots SL2 for TDD uplink transmission. The special slot SL0 for a TDD transmission on the TDD transmission path comprises, for example, 6 downlink symbols sb1 for the TDD downlink transmission, 4 guard symbols sb0 for a TDD guard period and 4 uplink symbols sb2 for the TDD uplink transmission. The number of the downlink symbols sb1, the guard symbols sb0, the uplink symbols sb2 is not used to limit the present disclosure. It is noted that a structure/configuration of the frame, sub-frame, and special slot can be determined in advance based on control information (DL packets) from the base station.

In the conventional implementation, the guard symbols sb0 could correspond to the TDD turning-off state OFF, but the researchers found that the TPUT degradation happened at the TDD guard period, the channel estimation (CE) error (causing the BLER) is happened on the second transmission path PH2A or PH2B due to Gain/Phase delta over the operating states, and the worst error is happened at the turning-off state OFF (shown in the Figure 2A or 2B). The longer TDD guard period is, the higher the probability of channel estimation error is. For preventing the channel estimation error and the throughput degradation several embodiments are provided. Taking Figure 2B for one example, during the special slot SL0 for the TDD transmission, the first transmission path PH1B can be controlled, via the ASM 111B, to be either in the TDD receiving state RX for the TDD downlink transmission and the TDD transmitting state TX for the TDD uplink transmission instead of the TDD turning-off state OFF during the guard symbols sb0. Taking Figure 2A for another example, during the special slot SL0 for the TDD transmission, the first transmission path PH1A can be controlled, via the switch SW1, to be either in the TDD receiving state RX for the TDD downlink transmission and the TDD transmitting state TX for the TDD uplink transmission instead of the TDD turning-off state OFF during the guard symbols sb0. For the sake of convenience, the following description uses Figures 2A and 2B as an example.

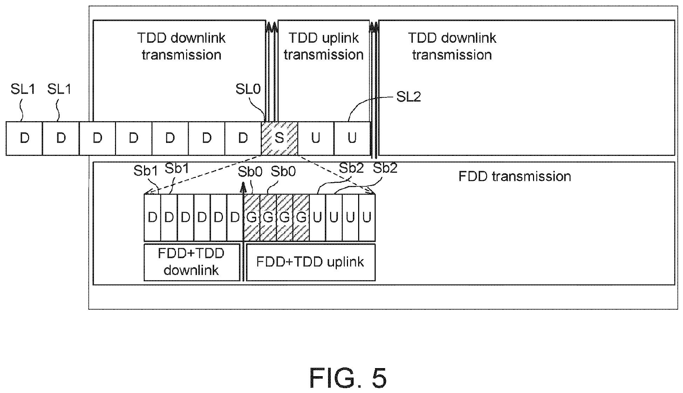

Please refer to Figure 5, which shows the timing control for the special slot SL0 according to one embodiment of the present disclosure. In one embodiment, as shown in the Figure 5, the first transmission path PH1A or PH1B (shown in the Figures 2A and 2B) is switched from the TDD receiving state RX for the TDD downlink transmission to the TDD transmitting state TX for the TDD uplink transmission once the guard symbols sb0 for the TDD guard period are entered. As shown in the example of the Figure 5, both the guard symbols sb0 and the uplink symbols sb2 are used for TDD uplink transmission, i.e., the first transmission path PH1A or PH1B is controlled to be in the TDD transmitting state TX for the TDD uplink transmission. In the special slot SL0, the TDD downlink transmission is directly changed to the TDD uplink transmission without any turning-off state OFF (shown in the Figures 2A and 2B).

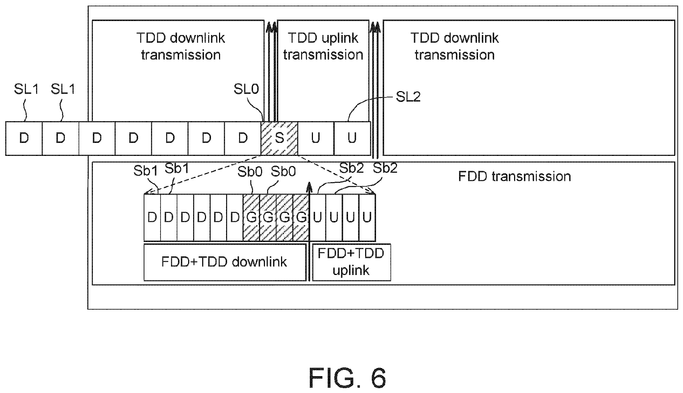

Please refer to Figure 6, which shows the timing control for the special slot SL0 according to another embodiment of the present disclosure. In another embodiment, as shown in the Figure 6, the first transmission path PH1A or PH1B (shown in the Figures 2A and 2B) is switched from the TDD downlink transmission to the TDD uplink transmission once the guard symbols sb0 for the TDD guard period are left. As shown in the example of the Figure 6, both the downlink symbols sb1 and the guard symbols sb0 are used for TDD downlink transmission, i.e., the first transmission path PH1A or PH1B is controlled to be in the TDD receiving state RX for the TDD downlink transmission. In the special slot SL0, the TDD downlink transmission is directly changed to the TDD uplink transmission without any turning-off state OFF (shown in the Figures 2A and 2B).

In the embodiment, the first transmission path PH1A or PH1B is controlled to have only two operating states during the special slot SL0, either in the TDD receiving state RX for the TDD downlink transmission or in the TDD transmitting state TX for the TDD uplink transmission. Therefore, the phase/gain on the second transmission path PH2A or PH2B would not vary greatly and the throughput degradation could be prevented.

Please refer to Figure 7, which shows the TDD transmission control and the gain/phase compensation according to one embodiment of the present disclosure. For further preventing the channel estimation error and the throughput degradation on the second transmission path PH2A or PH2B, the gain/phase compensation can be also executed. In the embodiment, taking Figure 2B as an example, but the present disclosure is not limited thereto.

In the TDD transmission control, a TDD transmission control code CDt is used, which can be stored in a first register. For example, "0x3" indicates the TDD receiving state RX for the TDD downlink transmission, and "0x2" indicates the TDD transmitting state TX for the TDD uplink transmission. In the embodiment, the TDD transmission control code CDt assigned for the guard symbols sb0 is identical to the TDD transmission control code CDt assigned for the uplink symbols sb2, as shown in Figure 7. That is to say, the guard symbols sb0 are controlled for executing the TDD uplink transmission, i.e., the first transmission path PH1B is controlled to be in the TDD transmitting state TX for the TDD uplink transmission during the guard symbols sb0. For example, as shown in the Figure 7, the TDD transmission control code CDt is transmitted to the ASM 111B to control the first transmission path PH1B to be in the TDD transmitting state TX instead of the TDD turning-off state OFF during the guard symbols sb0. The first transmission path PH1B only has the TDD receiving state RX for the TDD downlink transmission and the TDD transmitting state TX for the TDD uplink transmission during the special slot SL0. The first transmission path PH1B does not have the turning-off state OFF (shown in the Figure 2) during the special slot SL0. Therefore, the phase/gain on the downlink transmission of the second transmission path PH2B would not vary greatly and the throughput degradation could be prevented.

In another embodiment, the TDD transmission control code CDt could be transmitted to the switch SW1 to control the first transmission path PH1A to be in the TDD transmitting state TX instead of the TDD turning-off state OFF during the guard symbols sb0.

Moreover, in the gain/phase compensation, a gain/phase compensation codes CDf stored in a second register is used to adjust the impedance matching of the receiving path in the second transmission path PH2A or PH2B, for example, applying different gain/phase compensation codes CDf to the receiving path means applying different impedances to the receiving path. When the first transmission path PH1A or PH1B is controlled to be the TDD transmitting state TX, the gain/phase compensation is controlled at a first value, such as "0xA3". When the first transmission path PH1A or PH1B is controlled to be the TDD receiving state RX, the gain/phase compensation is controlled at a second value, such as "0x82". The first value and the second value are different. "0x82" or "0xA3" are different gain/phase compensation codes CDf for resulting in different impedance matching adjustment. As such, the phase/gain on the downlink transmission of the second transmission path PH2A or PH2B would be kept stable and the throughput degradation could be prevented.

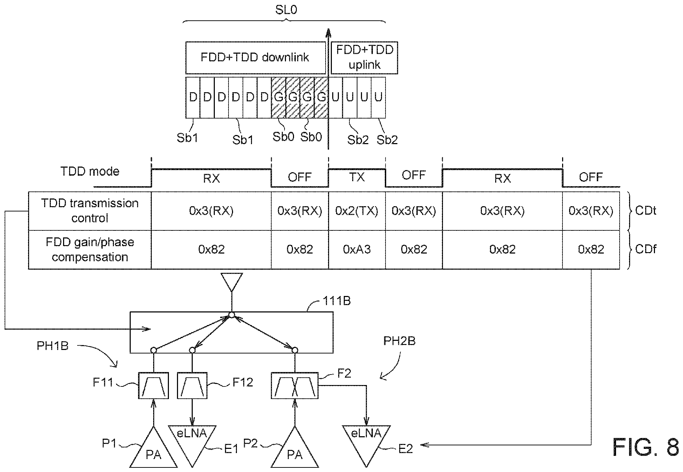

Please refer to Figure 8, which shows the TDD transmission control and the gain/phase compensation according to another embodiment of the present disclosure. For further preventing the channel estimation error and the throughput degradation on the second transmission path PH2A or PH2B, the gain/phase compensation can be also executed.

In the TDD transmission control, the TDD transmission control code CDt assigned for the guard symbols sb0 is identical to the TDD transmission control code CDt assigned for the downlink symbols sb1, as shown in the Figure 8. That is to say, the guard symbols sb0 are controlled for executing the TDD downlink transmission, i.e., the first transmission path PH1B is controlled to be in the TDD receiving state RX for the TDD downlink transmission during the guard symbols sb0. For example, as shown in the Figure 8, the TDD transmission control code CDt is transmitted to the ASM 111B to control the first transmission path PH1B to be in the TDD receiving state RX instead of the TDD turning-off state OFF during the guard symbols sb0. The first transmission path PH1B only has the TDD receiving state RX for the TDD downlink transmission and the TDD transmitting state TX for the TDD uplink transmission during the special slot SL0. The first transmission path PH1B does not have the turning-off state OFF (shown in the Figure 2) during the special slot SL0. Therefore, the phase/gain on the downlink transmission of the second transmission path PH2B would not vary greatly and the throughput degradation could be prevented.

In another embodiment, the TDD transmission control code CDt could be transmitted to the switch SW1 to control the first transmission path PH1A to be in the TDD receiving state RX instead of the TDD turning-off state OFF during the guard symbols sb0.

Moreover, in the gain/phase compensation, the gain/phase compensation codes CDf stored in the second register is used to adjust the impedance matching of the receiving path in the second transmission path PH2A or PH2B. When the first transmission path PH1A or PH1B is controlled to be the TDD transmitting state TX, the gain/phase compensation is controlled at a first value, such as "0xA3". When the first transmission path PH1A or PH1B is controlled to be the TDD receiving state RX, the gain/phase compensation is controlled at a second value, such as "0x82". The first value and the second value are different. "0x82" or "0xA3" are different gain/phase compensation codes CDf for resulting in different impedance matching adjustment. As such, the phase/gain on the downlink transmission on the second transmission path PH2A or PH2B would be kept stable and the throughput degradation could be prevented.

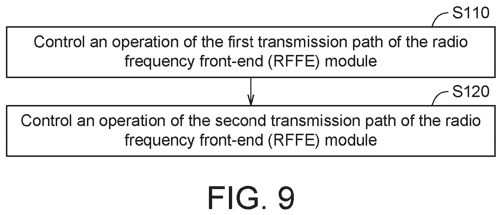

Please refer to Figure 9, which shows a flowchart of a controlling method for the user equipment 100 according to one embodiment of the present disclosure. The controlling method for the user equipment 100 comprises step S110 and step S120. The execution order of the step S110 and the step S120 is not used to limit the present disclosure. The step S110 and the step S120 could be executed simultaneously. In the step S110, the processing module 120 controls an operation of the first transmission path PH1A or PH1B of the radio frequency front-end (RFFE) module 110. As described above, the first transmission path PH1A or PH1B is controlled to be either the TDD transmitting state TX for executing the TDD uplink transmission or the TDD receiving state RX for executing the TDD downlink transmission during guard symbols sb0 (shown in the Figures 7, 8).

In the step S120, the processing module 120 controls an operation of the second transmission path PH2A, PH2B of the RFFE module 110. In this step, the gain/phase compensation is further applied on the second transmission path PH2A or PH2B.

According to the embodiments described above, the TDD transmission control and the gain/phase compensation are executed in the user equipment 100. Therefore, the phase/gain on the downlink transmission of the second transmission path PH2A or PH2B would not vary greatly and the throughput degradation could be prevented.

The above disclosure provides various features for implementing some implementations or examples of the present disclosure. Specific examples of components and configurations (such as numerical values or names mentioned) are described above to simplify/illustrate some implementations of the present disclosure. Additionally, some embodiments of the present disclosure may repeat reference symbols and/or letters in various instances. This repetition is for simplicity and clarity and does not inherently indicate a relationship between the various embodiments and/or configurations discussed.

It will be apparent to those skilled in the art that various modifications and variations can be made to the disclosed embodiments. It is intended that the specification and examples be considered as exemplars only, with a true scope of the disclosure being indicated by the following claims and their equivalents.

## Claims

1. A user equipment (UE) (100) comprising a radio frequency front-end (RFFE) module (110) and a processing module (120) configured to control the RFFE module (110), wherein the user equipment (100) is **characterized in that** the radio frequency front-end (RFFE) module (110) comprises:
a first transmission path (PH1), which is a Time Division Duplexing (TDD) path; and
a second transmission path (PH2), which is another TDD path or a Frequency Division Duplexing (FDD) path;
wherein a special slot (SL0) for a TDD transmission on the first transmission path (PH1) comprises at least one downlink symbol (sb1), at least one uplink symbol (sb2) and at least one guard symbol (sb0); and
wherein during the guard symbol (sb0), the first transmission path (PH1) is controlled to be either a TDD receiving state (RX) for executing a TDD downlink transmission or a TDD transmitting state (TX) for executing a TDD uplink transmission.

2. The UE as claimed in claim 1, wherein the RFFE module further comprises:
an Antenna Switch Module (ASM), connected to the first transmission path, wherein the ASM is controlled by a TDD transmission control code to change the first transmission path to be at either the TDD receiving state or the TDD transmitting state.

3. The UE as claimed in claim 1 or 2, wherein the RFFE module further comprises:
a switch, located on the first transmission path, wherein the switch is controlled by a TDD transmission control code to change the first transmission path to be at either the TDD receiving state or the TDD transmitting state.

4. The UE as claimed in any one of claims 1 to 3, wherein the first transmission path is controlled via a TDD transmission control code, and the TDD transmission control code assigned for the guard symbol is identical to the TDD transmission control code assigned for the uplink symbol.

5. The UE as claimed in any one of claims 1 to 3, wherein the first transmission path is controlled via a TDD transmission control code, and the TDD transmission control code assigned for the guard symbol is identical to the TDD transmission control code assigned for the downlink symbol.

6. The UE as claimed in any one of claims 1 to 5, wherein a gain/phase compensation is applied on the second transmission path.

7. The UE as claimed in any one of claims 1 to 6, wherein when the first transmission path is controlled to be the TDD transmitting state, the gain/phase compensation is controlled at a first value; when the first transmission path is controlled to be the TDD receiving state, the gain/phase compensation is controlled at a second value; and the first value and the second value are different.

8. The UE as claimed in any one of claims 1 to 7, wherein a quality of the at least one guard symbol is more than one, during all of the guard symbols, the first transmission path is controlled to be either the TDD receiving state for executing the TDD downlink transmission or the TDD transmitting state for executing the TDD uplink transmission.

9. A controlling method of a user equipment (UE) (100), **characterized in that** the controlling method comprises:
(S110) controlling, by a processing module (120), an operation of a first transmission path (PH1) of a radio frequency front-end (RFFE) module (110), wherein the first transmission path (PH1) is a Time Division Duplexing (TDD) path, a special slot (SL0) for a TDD transmission on the first transmission path (PH1) comprises at least one downlink symbol (sb1), at least one uplink symbol (sb2) and at least one guard symbol (sb0), and during the guard symbol (sb0), the first transmission path (PH1) is controlled to be either a TDD receiving state (RX) for executing a TDD downlink transmission or a TDD transmitting state (TX) for executing a TDD uplink transmission; and
(S120) controlling, by the processing module (120), an operation of a second transmission path (PH2) of the RFFE module (110), wherein the second transmission path (PH2) is another TDD path or a Frequency Division Duplexing (FDD) path.

10. The controlling method of the UE as claimed in claim 9, wherein in the step of controlling the operation of the first transmission path, the processing module controls an Antenna Switch Module (ASM) via a TDD transmission control code to change the first transmission path to be at either the TDD receiving state or the TDD transmitting state.

11. The controlling method of the UE as claimed in claim 9 or 10, wherein in the step of controlling the operation of the first transmission path, the processing module controls a switch via a TDD transmission control code to change the first transmission path to be at either the TDD receiving state or the TDD transmitting state.

12. The controlling method of the UE as claimed in any one of claims 9 to 11, wherein the first transmission path is controlled via a TDD transmission control code, and the TDD transmission control code assigned for the guard symbol is identical to the TDD transmission control code assigned for the uplink symbol.

13. The controlling method of the UE as claimed in any one of claims 9 to 11, wherein the first transmission path is controlled via a TDD transmission control code, the TDD transmission control code assigned for the guard symbol is identical to the TDD transmission control code assigned for the downlink symbol.

14. The controlling method of the UE as claimed in any one of claims 9 to 13, wherein in the step of controlling the operation of the second transmission path, a gain/phase compensation is applied on the second transmission path.

15. The controlling method of the UE as claimed in claim 14, wherein when the first transmission path is controlled to be the TDD transmitting state, the gain/phase compensation is controlled at a first value; when the first transmission path is controlled to be the TDD receiving state, the gain/phase compensation is controlled at a second value; and the first value and the second value are different. * * * * *
